# EUROPÄISCHE PATENTSCHRIFT

(11) **EP 3 321 546 B1**
(45) Veröffentlichungstag und Bekanntmachung des Hinweises auf die Patenterteilung: **08.01.2020**
(21) Anmeldenummer: 17001816.2
(22) Anmeldetag: 07.11.2017
(51) Int. Cl.: F16J 15/10, F16J 15/12, F16L 23/18, F16L 23/22

(54) **DICHTRING AUS ELASTOMEREM WERKSTOFF MIT VERSTEIFUNGSEINLAGE**
SEALING RING MADE OF ELASTOMERIC MATERIAL WITH REINFORCED INSERT
BAGUE D'ÉTANCHÉITÉ EN MATÉRIAU ÉLASTOMÈRE POURVUE D'UN INSERT DE RIGIDIFICATION

(30) Priorität: 11.11.2016 DE 102016013485
(43) Veröffentlichungstag der Anmeldung: 16.05.2018
(73) Patentinhaber: Klinger AG, 6300 Zug (CH)
(72) Erfinder: Steffens, Robert, 55124 Mainz (DE)
(74) Vertreter: Henseler, Daniela

(56) Entgegenhaltungen:
- CN-Y- 2 934 855
- DE-A1- 3 724 486
- US-A- 3 531 133

## Beschreibung

Die Erfindung betrifft einen Dichtring aus elastomerem Werkstoff mit Versteifungseinlage für Flanschverbindungen im Behälter- und Rohrleitungsbau nach dem Oberbegriff des Anspruchs 1.

Wie in DE 10 2010 060 685 A1 beschrieben, werden Dichtringe aus einem elastomeren Werkstoff, in den eine Stahleinlage eingelegt ist, typischerweise an Rohrverbindungen eingesetzt, wobei an den Verbindungsstellen der Rohrinnenraum gegenüber der Umgebung abgedichtet wird. Aus der Praxis sind dazu Elastomer-Metall-Dichtringe bekannt, bei denen ein flacher, metallischer Träger vollständig von einem zusammenhängenden Elastomerkörper umgeben ist.

Bei diesen Dichtungen erfolgt die Abdichtung im Krafthauptschluss, das heißt die gesamte zwischen den zu verbindenden Teilen wirkende Flächenpressung liegt an dem Elastomerkörper an. Elastomer-Metall-Dichtringe mit einem Träger und einer vollständigen Ummantelung weisen deshalb ein erhebliches Setzverhalten auf, wobei die miteinander verbundenen Teile durch die Elastizität des Elastomerkörpers in einem gewissen Maße gegeneinander beweglich bleiben. Durch Änderung der Flächenpressung, Kippmomente oder dynamischen Belastungen kann auch die Dichtwirkung beeinträchtigt werden. Insbesondere besteht die Gefahr, dass der Elastomerkörper überlastet wird.

Aus DE 1 023 736 AS ist ein als geschlossener Ring ausgebildeter Flachdichtungsring aus elastischem Werkstoff mit Stahleinlage bekannt, bei dem die von dem elastischen Werkstoff gebildete elastische Schicht in radialer Richtung verschiedene Dicken aufweist. Ein solcher Dichtring, bei dem die den eingelegten Ring aus einem steifen Werkstoff umgebende Gummischicht verschiedene Dicken aufweist, liefert eine elastische Reserve, um ein Undichtwerden weitgehend zu verhindern.

Beim Zusammenziehen der Leitungen infolge Kälteeinwirkung oder bei Biegebeanspruchungen kann sich ein solcher Dichtring in eingebautem Zustand infolge seiner großen elastischen Reserve genügend ausdehnen und sich jeder Änderung der Flächenpressung in einem Flansch ohne Weiteres anpassen. Die Verdickung kann dabei in der Mitte des Querschnitts des Dichtrings oder am inneren Durchmesser oder am äußeren Umfang des Dichtrings vorgesehen sein.

Bei diesen vorbekannten Dichtringen aus Elastomeren mit einer ringförmigen Stahleinlage hat die Stahleinlage die Funktion, als Stütz- und Montagehilfe zu dienen. Als vorteilhaft hat sich dies in vielen industriellen Anwendungen, z.B. Gas, Wasser, Chemie, usw., als sehr anwenderfreundlich erwiesen.

Als nachteilig erwiesen hat sich allerdings, dass das Umhüllen der dünnen, senkrecht zur Druckrichtung flach in der Ringebene liegenden Einlage mit üblicherweise rechteckigem Querschnitt aus steifem Werkstoff häufig zu herstellungsbedingten Lageverschiebungen der Einlage gegenüber einer zentrierten Position führt. Dies kann zu einer unsymmetrischen Stützfunktion des Dichtrings im Dichtungsspalt führen, was wiederum Undichtigkeiten zur Folge haben kann.

Aus US 3,531,133 ist ein Dichtring aus einem elastomeren Werkstoff mit einer Versteifungseinlage bekannt. Dieser Dichtring weist einen mittigen deformierbaren Abschnitt auf, der kronenartig gegenüber randseitigen Abschnitten vorsteht. Eine unsymmetrische Stützfunktion des Dichtrings soll durch diesen Kronenabschnitt vermieden werden, was jedoch einen aufwändigen Verbrauch an Elastomer bedingt.

Aufgabe der Erfindung ist es daher, einen Dichtring aus elastomerem Werkstoff mit Versteifungseinlage zu schaffen, der auch bei zunehmender Belastung einwandfrei abdichtet.

Diese Aufgabe wird durch die Merkmale des Anspruchs 1 gelöst.

Hierdurch wird ein Dichtring aus einem elastomeren Werkstoff geschaffen, bei dem zum einen ein statischer Träger als Einlage von dem Elastomer komplett umschlossen wird und zum weiteren sich bis an den konstruktiv bedingten Außendurchmesser und Innendurchmesser des Dichtrings als stabile Dichtringlippe ausbildet. Eine spezielle zweistufige Endgeometrie des Dichtrings wird ferner dadurch geprägt, dass Übergangsbereiche, die getreppt ausgebildet sind, für eine Selbstzentrierung der Einlage bei der Herstellung des Dichtrings sorgen.

Durch eine passgenaue Fügung in beispielsweise einer Vulkanisationsform sowie durch eine an die Endgeometrie des Dichtrings angepasste Profilierung eines Halbzeugprofils kann es während des Vulkanisationsprozesses zu einer thermisch bedingt fluidisierenden Selbstzentrierung der eingelegten statischen Einlage kommen, welche bei dem nachfolgenden Aushärten des Elastomers in Verbindung mit dem Abkühlprozess unverrückbar zentrisch fixiert ist.

Unter Druckbelastung behält ein solcher Dichtring seine zentrierte Stellung, was sich vorteilhaft auf die Dichtungseigenschaften auswirkt. Bei einer primären Montage kann der Dichtring so verpresst werden, dass die Rautiefen eines Flanschblattes nicht in Kontakt mit der statischen Einlage treten können. Hierbei arbeitet der Dichtring nach dem Prinzip des Krafthauptschlusses und trägt über das Elastomer auftretende Kräfte, wie beispielsweise Rohrleitungskräfte, Flanschblatt-/Schraubenkräfte, Prozessdruckschwankungen usw., sicher ab.

Bei sehr großen Belastungen kann der Anpressdruck so erhöht werden, dass Rautiefen des Flanschblattes in Blocklage zu der statischen Einlage des Dichtrings kommen und somit die noch wesentlich höher belastbare Form eines Kraftnebenschlusses entstehen kann und alle bereits genannten Kräfte über die Blocklage sicher abgetragen werden können. Eine Korrosion der betreffenden Ebenen des Flanschblattes als auch der statischen Einlage ist auszuschließen, da das Elastomer hier vollflächig abdichtet und höchste Leckage-Klassen ermöglicht.

Durch eine erhaben profilierte Darstellung des mittleren Dichtkörperabschnitts können bei einer Verpressung die Kräfte hier zuerst aufgenommen werden. Da sich ein Elastomer innerhalb seiner physikalischen und chemischen Einsatzgrenzen wie eine Newton'sche Flüssigkeit verhält, fließen überschüssige Elastomeranteile in den Bereich der inneren und äußeren Dichtlippe, welche sodann den entstehenden Spalt zwischen den Flanschstegen ausfüllen, vorzugsweise komplett ausfüllen. Durch dieses volumenoptimierte Verhalten von inkompressiblen Systemen - hier Elastomere - kommt es zu keiner Intrusion in den Ringraum des Flansches sowie Extrusion in einen inneren Schraubenkreisdurchmesser des Flanschblattes.

Der mittlere Dichtkörperabschnitt kann dabei die Gestalt eines planen, ringförmig erhabenen Stegprofils besitzen, dessen axiale Stärke sich aus der Summe der Einzelstärken der Einlage und der oberen und unteren Elastomerschicht ergibt.

Als elastomere Werkstoffe verwendbar sind beispielsweise Gummi, Ethylen-Propylen-Dien-Kautschuk (EPDM), Nitrilkautschuk (NBR), Fluor-Kautschuk (FKM) usw.

Der erfindungsgemäße Dichtring ermöglicht eine deutliche Reduktion des notwendigen elastomeren Materials und damit im Ergebnis eine starke Entlastung der Umwelt durch erhebliche Reduktion an thermischer Energie für die Vulkanisation. Der Dichtring kann in wählbaren Abmessungen hergestellt werden und ist für alle flanschartigen Dichtverbindungselemente, wie beispielsweise EN, ANSI, ASME, OEM usw., geeignet.

Weitere Ausgestaltungen der Erfindung sind der nachfolgenden Beschreibung und den Unteransprüchen zu entnehmen.

Die Erfindung wird nachstehend anhand des in den beigefügten Abbildungen dargestellten Ausführungsbeispiels näher erläutert.
Fig. 1 zeigt schematisch eine Draufsicht eines axial geschnittenen Dichtrings gemäß einem ersten Ausführungsbeispiel,
Fig. 2 zeigt schematisch einen Querschnitt eines Dichtringsegments gemäß Fig. 1,
Fig. 3 zeigt schematisch einen Teilquerschnitt eines Dichtrings gemäß einem zweiten Ausführungsbeispiel,
Fig. 4 zeigt schematisch einen Teilquerschnitt eines Dichtrings gemäß einem dritten Ausführungsbeispiel.

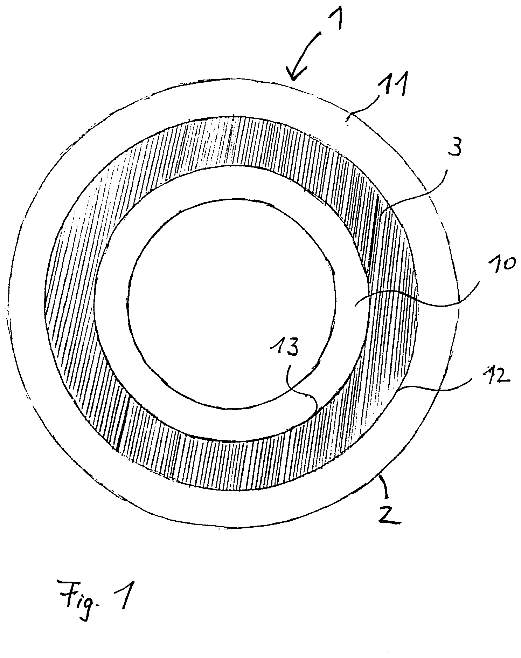

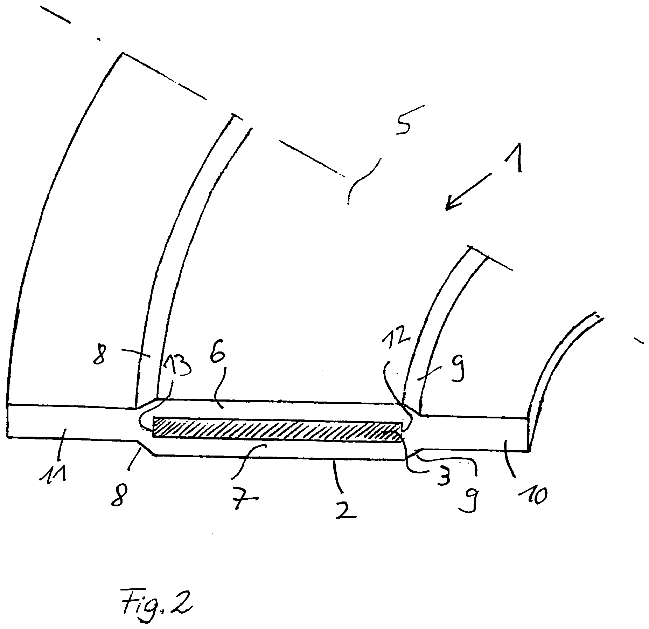

Fig. 1 und Fig. 2 zeigen einen Dichtring 1 für einen Krafthauptschluss in Flanschverbindungen für den Behälter- und Rohrleitungsbau. Der Dichtring 1 umfasst einen als geschlossenen Ring ausgebildeten Dichtkörper 2 aus einem elastomeren Werkstoff, der eine senkrecht zur Druckrichtung flach in der Ringebene liegende Einlage 3 aus steifem Werkstoff allseitig umhüllt. Die Einlage 3 ist eine statische Einlage.

Der Dichtkörper 2 weist eine die Einlage 3 umgebende Elastomerschicht auf, die in radialer Richtung verschiedene Dicken aufweist. So weist der Dichtkörper 2 einen umlaufenden mittleren Dichtkörperabschnitt 5 mit einer Elastomerschicht 6 oberhalb der Einlage 3 und einer Elastomerschicht 7 unterhalb der Einlage 3 auf. Die Elastomerschichten 6, 7 münden radial endseitig der Einlage 3 jeweils über einen abgetreppten Übergangsbereich 8, 9 in eine umlaufende innere Dichtringlippe 10 und eine äußere Dichtringlippe 11 des Dichtkörpers. Die Dichtringlippen 10, 11 weisen zudem eine gegenüber dem mittleren Dichtkörperabschnitt 5 reduzierte Dicke auf.

Der steife Werkstoff der Einlage 3 ist beispielsweise ein Metall und/oder eine Legierung, insbesondere Stahl, Edelstahl, Kupfer, Titan, oder ein Kunststoff, insbesondere GFK, PET. Die Einlage 3 ist vorzugsweise ein geschlossen ausgebildeter Stahlring.

Die Übergangsbereiche 8, 9 sind vorzugsweise symmetrisch zu den Dichtlippen 10, 11 ausgerichtet und sorgen für eine zentrierende Positionierung der Einlage 3 im Dichtkörper 2. Bevorzugt ist ferner, dass die obere Elastomerschicht 6 und die untere Elastomerschicht 7 in eine jeweils homogene Dichtringlippe 10, 11 übergehen.

Wie Fig. 2 zeigt, kann der jeweilige Übergangsbereich 8, 9 eine flach gefaste Profillinie besitzen. Insoweit kann man auch von der Ausbildung einer Halbsicke randseitig am Dichtkörperabschnitt 5 sprechen, der als erhabener Stegabschnitt gegenüber den Dichtringlippen 10, 11 axial vorsteht. Vorzugsweise ist der Dichtkörperabschnitt 5 ein beidseits planes, ringförmiges sowie erhabenes Stegprofil unterhalb und oberhalb der statischen Einlage 3.

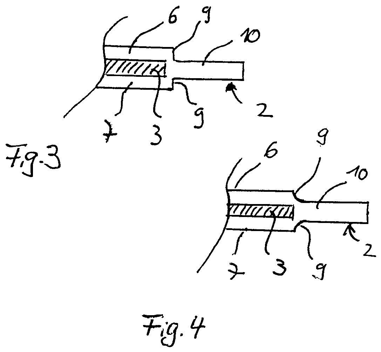

Wie Fig. 3 und Fig. 4 zeigen, können die Übergangsbereiche 8, 9 alternativ rechtwinkelige oder gerundete Profillinien besitzen.

Der mittlere Dichtkörperabschnitt 5 weist eine radiale Erstreckung auf, die vorzugsweise mittig zwischen den Dichtringlippen 10, 11 liegt. Die Dichtringlippen 10, 11 sind vorzugsweise eben ausgebildet, und gegenüber diesen ist der mittlere Dichtkörperabschnitt 5 mit einem erhabenen Stegprofil ausgebildet.

Die Stärke der Dichtringlippen 10, 11 entspricht beispielsweise der Summe der oberen und unteren Elastomerschicht 6, 7.

Der elastomere Werkstoff kann ein Gummi oder ein synthetischer Kautschuk sein. Die Shore A-Härte liegt vorzugsweise bei 60° bis 90°.

Die Einlage 3 weist vorzugsweise einen rechteckigen Querschnitt auf. Dies ist vorteilhaft für Anwendungen, bei denen der Dichtring bei der Montage in eine Blocklage gelangt. Der rechteckige Querschnitt der Einlage 3 definiert weiterhin in radialer Richtung eine vordere randseitige Umfangsfläche 12 und eine hintere randseitige Umfangsfläche 13, die stützende Aufstandsflächen für die Übergangsbereiche 8, 9 bilden können dann, wenn die Übergangsbereiche 8, 9, wie in Fig. 2 bis Fig. 4 dargestellt, benachbart oder überlappend zu den randseitigen Umfangsflächen 12, 13 angeordnet sind.

## Patentansprüche

1. Dichtring für einen Krafthauptschluss in Flanschverbindungen für den Behälter- und Rohrleitungsbau, umfassend einen als geschlossenen Ring ausgebildeten Dichtkörper (2) aus einem elastomeren Werkstoff, der eine senkrecht zur Druckrichtung flach in der Ringebene liegende Einlage (3) aus steifem Werkstoff allseitig umhüllt, und der Dichtkörper (2) eine die Einlage (3) umgebende Elastomerschicht aufweist, die in radialer Richtung verschiedene Dicken aufweist,
wobei der Dichtkörper (2) einen umlaufenden mittleren Dichtkörperabschnitt (5) mit einer Elastomerschicht (6, 7) ober- und unterhalb der Einlage (3) aufweist, und **dadurch gekennzeichnet, dass** die Elastomerschichten (6, 7) radial endseitig der Einlage (3) jeweils über einen abgetreppten Übergangsbereich (8, 9) in eine umlaufende innere und äußere Dichtringlippe (10, 11) des Dichtkörpers (2) münden, wobei die Dichtringlippen (10, 11) eine gegenüber dem mittleren Dichtkörperabschnitt (5) reduzierte Dicke aufweisen.

2. Dichtring nach Anspruch 1, **dadurch gekennzeichnet, dass** der steife Werkstoff ein Metall und/oder eine Legierung, insbesondere Stahl, Edelstahl, Kupfer, Titan, oder ein Kunststoff, insbesondere GFK, PET, ist.

3. Dichtring nach Anspruch 1 oder 2, **dadurch gekennzeichnet, dass** die Einlage (3) ein geschlossen ausgebildeter Stahlring ist.

4. Dichtring nach einem der Ansprüche 1 bis 3, **dadurch gekennzeichnet, dass** die Übergangsbereiche (8, 9) symmetrisch zu den Dichtringlippen (10, 11) ausgerichtet sind für eine zentrierende Positionierung der Einlage (3) im Dichtkörper (2), wobei die obere und untere Elastomerschicht (6, 7) in eine jeweils homogene Dichtringlippe (10, 11) übergehen.

5. Dichtring nach einem der Ansprüche 1 bis 4, **dadurch gekennzeichnet, dass** die Übergangsbereiche (8, 9) eine flach gefaste, rechtwinkelige oder gerundete Profillinie besitzen.

6. Dichtring nach einem der Ansprüche 1 bis 5, **dadurch gekennzeichnet, dass** der mittlere Dichtkörperabschnitt (5) eine radiale Erstreckung aufweist, die mittig zwischen den Dichtringlippen (10, 11) liegt.

7. Dichtring nach einem der Ansprüche 1 bis 6, **dadurch gekennzeichnet, dass** die Dichtringlippen (10, 11) eben ausgebildet sind und gegenüber denen der mittlere Dichtkörperabschnitt (5) mit einem erhabenen Stegprofil ausgebildet ist.

8. Dichtring nach einem der Ansprüche 1 bis 7, **dadurch gekennzeichnet, dass** die Stärke der Dichtringlippen (10, 11) der Summe der oberen und unteren Elastomerschicht (6, 7) entspricht.

9. Dichtring nach einem der Ansprüche 1 bis 8, **dadurch gekennzeichnet, dass** der elastomere Werkstoff ein Gummi oder ein synthetischer Kautschuk ist.

10. Dichtring nach einem der Ansprüche 1 bis 9, **dadurch gekennzeichnet, dass** die Einlage (3) einen rechteckigen Querschnitt aufweist.

11. Dichtring nach Anspruch 10, **dadurch gekennzeichnet, dass** der rechteckige Querschnitt der Einlage (3) in radialer Richtung eine vordere Umfangsfläche (12) und eine hintere Umfangsfläche (13) definiert, die stützende Aufstandsflächen für die Übergangsbereiche (8, 9) bei benachbarter oder überlappender Anordnung bilden.

## Claims

1. Sealing ring for a main load connection in flange connections for container and pipeline construction, comprising a sealing body (2) formed as a closed ring made of an elastomer material, which envelops an insert (3) of rigid material lying flat in the plane of the ring, perpendicular to the pressure direction, and the sealing body (2) has an elastomer layer surrounding the insert (3), which has various thicknesses in the radial direction, wherein
the sealing body (2) has a circumferential central sealing body section (5) with an elastomer layer (6, 7) above and below the insert (3), and
**characterized in that**
the elastomer layers (6, 7) each open radially at the ends of the insert (3) via a stepped transition region (8, 9) into a circumferential inner and outer sealing ring lip (10, 11) of the sealing body (2), wherein the sealing ring lips (10, 11) have a thickness that is reduced with respect to the central sealing body section (5).

2. Sealing ring according to claim 1, **characterized in that** the rigid material is a metal and/or an alloy, in particular steel, stainless steel, copper, titanium, or a plastic, in particular GRP, PET.

3. Sealing ring according to claim 1 or 2, **characterized in that** the insert (3) is a closed steel ring.

4. Sealing ring according to one of claims 1 to 3, **characterized in that** the transition regions (8, 9) are aligned symmetrically relative to the sealing ring lips (10, 11) for centring positioning of the insert (3) in the sealing body (2), wherein the upper and lower elastomer layer (6, 7) merge into a respectively homogenous sealing ring lip (10, 11).

5. Sealing ring according to one of claims 1 to 4, **characterized in that** the transition regions (8, 9) have a flat chamfered, rectangular or rounded profile line.

6. Sealing ring according to one of claims 1 to 5, **characterized in that** the central sealing body section (5) has a radial extent which is located centrally between the sealing ring lips (10, 11).

7. Sealing ring according to one of claims 1 to 6, **characterized in that** the sealing ring lips (10, 11) are level and by comparison therewith the central sealing body section (5) is formed with an elevated web profile.

8. Sealing ring according to one of claims 1 to 7, **characterized in that** the thickness of the sealing ring lips (10, 11) corresponds to the sum of the upper and lower elastomer layers (6, 7).

9. Sealing ring according to one of claims 1 to 8, **characterized in that** the elastomeric material is a natural rubber or a synthetic rubber.

10. Sealing ring according to one of claims 1 to 9, **characterized in that** the insert (3) has a rectangular cross section.

11. Sealing ring according to claim 10, **characterized in that** the rectangular cross section of the insert (3) defines a front circumferential surface (12) and a rear circumferential surface (13) in the radial direction, which form supporting contact surfaces for the transition regions (8, 9) in adjacent or overlapping arrangement.

## Revendications

1. Bague d'étanchéité pour une liaison de force série dans des raccordements par bride pour la fabrication de contenants et de canalisations, comprenant un corps d'étanchéité (2) réalisé en tant que bague fermée, composé d'un matériau élastomère, qui enveloppe de toutes parts un insert (3), situé de manière perpendiculaire par rapport à la direction de pression à plat dans le plan de bague, composé d'un matériau rigide, et le corps d'étanchéité (2) présente une couche d'élastomère entourant l'insert (3), qui présente différentes épaisseurs dans la direction radiale,
dans laquelle
le corps d'étanchéité (2) présente une section de corps d'étanchéité (5) centrale périphérique avec une couche d'élastomère (6, 7) au-dessus et en dessous de l'insert (3),
**caractérisée en ce que**
les couches d'élastomère (6, 7) débouchent radialement du côté d'une extrémité de l'insert (3) respectivement par l'intermédiaire d'une zone de transition (8, 9) étagée dans des lèvres de bague d'étanchéité intérieure et extérieure (10, 11) périphériques du corps d'étanchéité (2), dans laquelle les lèvres de bague d'étanchéité (10, 11) présentent une épaisseur réduite par rapport à la section de corps d'étanchéité (5) centrale.

2. Bague d'étanchéité selon la revendication 1, **caractérisée en ce que** le matériau rigide est un métal et/ou un alliage, en particulier de l'acier, de l'acier inoxydable, du cuivre, du titane ou une matière plastique, en particulier une matière plastique renforcée par des fibres de verre, du PET.

3. Bague d'étanchéité selon la revendication 1 ou 2, **caractérisée en ce que** l'insert (3) est une bague en acier réalisée de manière fermée.

4. Bague d'étanchéité selon l'une quelconque des revendications 1 à 3, **caractérisée en ce que** les zones de transition (8, 9) sont orientées de manière symétrique par rapport aux lèvres de bague d'étanchéité (10, 11) en vue d'un positionnement de centrage de l'insert (3) dans le corps d'étanchéité (2), dans laquelle les couches d'élastomère supérieure et inférieure (6, 7) se confondent en une lèvre de bague d'étanchéité (10, 11) respectivement homogène.

5. Bague d'étanchéité selon l'une quelconque des revendications 1 à 4, **caractérisée en ce que** les zones de transition (8, 9) possèdent une ligne de profil chanfreinée à plat, rectangulaire ou arrondie.

6. Bague d'étanchéité selon l'une quelconque des revendications 1 à 5, **caractérisée en ce que** la section de corps d'étanchéité (5) centrale présente une extension radiale, qui se situe au centre entre les lèvres de bague d'étanchéité (10, 11).

7. Bague d'étanchéité selon l'une quelconque des revendications 1 à 6, **caractérisée en ce que** les lèvres de bague d'étanchéité (10, 11) sont réalisées de manière plane, par rapport à celles-ci la section de corps d'étanchéité (5) centrale est réalisée avec un profil de nervure en relief.

8. Bague d'étanchéité selon l'une quelconque des revendications 1 à 7, **caractérisée en ce que** l'épaisseur des lèvres de bague d'étanchéité (10, 11) correspond à la somme des couches d'élastomère supérieure et inférieure (6, 7).

9. Bague d'étanchéité selon l'une quelconque des revendications 1 à 8, **caractérisée en ce que** le matériau élastomère est une gomme ou un caoutchouc synthétique.

10. Bague d'étanchéité selon l'une quelconque des revendications 1 à 9, **caractérisée en ce que** l'insert (3) présente une section transversale rectangulaire.

11. Bague d'étanchéité selon la revendication 10, **caractérisée en ce que** la section transversale rectangulaire de l'insert (3) définit dans une direction radiale une surface périphérique avant (12) et une surface périphérique arrière (13), qui forment des surfaces d'appui de soutien pour les zones de transition (8, 9) lors de l'agencement adjacent ou en chevauchement.
